# EUROPÄISCHE PATENTSCHRIFT

(11) **EP 1 629 639 B1**
(45) Veröffentlichungstag und Bekanntmachung des Hinweises auf die Patenterteilung: **03.07.2013**
(21) Anmeldenummer: 04735024.4
(22) Anmeldetag: 27.05.2004
(51) Int. Cl.: H04L 29/06

(54) **VERFAHREN ZUR WEITERGABE VON IP-PAKETEN AN EINE EXTERNE STEUERKOMPONENTE EINES NETZKNOTENS**
METHOD FOR RELAYING IP-PACKETS TO AN EXTERNAL CONTROL COMPONENT OF A NETWORK NODE
PROCEDE DE RETRANSMISSION DE PAQUETS IP SUR UN COMPOSANT DE COMMANDE EXTERNE D'UN NOEUD DE RESEAU

(30) Priorität: 30.05.2003 DE 10324603
(43) Veröffentlichungstag der Anmeldung: 01.03.2006
(73) Patentinhaber: Siemens Aktiengesellschaft, 80333 München (DE)
(72) Erfinder: BERGMANN, Johannes, 82347 Bernried (DE); SCHMITT, Anton, 85591 Vaterstetten (DE); WINKLER, Christian, 80339 München (DE)
(86) Internationale Anmeldenummer: PCT/EP2004/050948
(87) Internationale Veröffentlichungsnummer: WO 2004/107674

(56) Entgegenhaltungen:
- WO-A-01/03383
- MINGHAI XU ET AL: "Implementation techniques of intserv/diffserv integrated network" IEEE, Bd. 1, 9. April 2003 (2003-04-09), Seiten 231-234, XP010643580
- JIN-CHEOL KIM ET AL: "A dynamic admission control scheme in a diffserv domain" IEEE, 26. Mai 2002 (2002-05-26), Seiten 183-187, XP010596794

## Beschreibung

Verfahren zur Weitergabe von IP-Paketen an eine externe Steuerkomponente eines Netzknotens.

Die Erfindung betrifft ein Verfahren nach dem Oberbegriff des Anspruchs 1.

Zukünftig werden Internet-Protokoll-Netze, kurz IP-Netze, neben den heute üblichen Internet- und Best-effort-Diensten auch höherwertige Qualitätsdienste transportieren und neue Anwendungen erlauben. Dazu sind Erweiterungen der Steuerung der Netzknoten eines IP-Netzes bzw. der Netzsteuerung nötig, z.B. zur Verwaltung der Netzressourcen oder für schnelle Rekonfigurationen im Fehlerfall.

Generell gibt es die Alternativen:
- Steuerkomponenten in die Netzkomponenten, Netzknoten und/oder Netzelemente, wie Router, zu integrieren oder
- Steuerkomponenten als externe Server an die zu steuernden Netzkomponenten, Netzknoten bzw. Router anzubinden. Dies kann direkt, d.h. durch eine Verbindung oder Leitung zwischen einer externen Schnittstelle der Netzkomponente und der in der Nähe befindlichen Steuerkomponente, oder über eine Netzverbindung zwischen Netzkomponente und Steuerkomponente erfolgen.

Die erste integrierte Lösung hat den Vorteil, dass der Steuerkomponente durch die enge Kopplung zur Netzkomponente interne Informationen der Netzkomponente zur Verfügung stehen.

Demgegenüber ist eine "beigestellte" Lösung herstellerunabhängig und flexibler, da sie gerade nicht so eng mit den Interna der Netzkomponente verwoben ist. Darüber hinaus können "beigestellte" Lösungen auf standardisierten Hardware-, kurz HW, und Software-, kurz SW, Lösungen basieren, während Netzkomponenten, wie Router, meist auf proprietären HW/SW-Lösungen basieren. Durch "beigestellte" Steuerkomponenten lassen sich kürzere Entwicklungszyklen und Kosteneinsparungen erreichen. Der Nachteil "beigestellter" Lösungen besteht jedoch darin, dass interne Informationen der Netzkomponente nicht zur Verfügung stehen.

Am Beispiel einer Admission Control-, kurz AC, Steuerkomponente soll im folgenden die Problematik der zweiten, externen, "beigestellten" Server-Lösung dargestellt werden.

Eine Aufgabe einer Admission Control besteht darin, ankommende Ressourcen Anfragen entgegenzunehmen, diese mit den noch verfügbaren Ressourcen abzugleichen und bei noch verfügbaren Ressourcen einen Netzknoten bzw. Router, z.B. den Router am Netzrand respektive Edge-Router für die Kontrolle des Datenflusses zu programmieren. Dies umfasst die Einstellung von sogenannten Funktionen, wie marking, filtering und policing.

Dabei treten u.a. die folgenden zwei Fragestellungen auf:
A) Wie erreichen die Ressourcen-Anfragen die beigestellte Steuerungskomponente bzw. Admission Control?
B) Wie kann die Steuerungskomponente bzw. Admission Control den Netzknoten steuern und konfigurieren und woher bezieht die Steuerungskomponente die nötigen Informationen über die Interna der Netzkomponente, z.B., an welchem Interface ist ein Paket empfangen worden und welches Interface ist zu konfigurieren?

Zu A) existieren im Prinzip zwei Lösungsvarianten:
1) Der Datenpfad, den die IP Pakete nehmen, ist bekannt und entsprechend kann die Steuerungskomponente bzw. Admission Control direkt adressiert werden. Dies wird als sogenannte Out-Band Signalisierung bezeichnet.
2) Das Signalisierungsprotokoll folgt dem Pfad der Datenpakete und findet so die Steuerungskomponente bzw. Admission Control automatisch. Dies wird als sogenannte In-Band Signalisierung bezeichnet.

Im folgenden wird ausschließlich von der Signalisierung nach Variante 2) ausgegangen, also der In-Band Signalisierung.

Das standardisierte Ressourcen Reservierungs-Protokoll RSVP ist ein In-Band Signalisierungsprotokoll. Es löst die oben aufgezeigte Fragestellungen, wie unter Punkt 2) beschrieben, und führt eine Hop-by-Hop Reservierung im Netzknoten durch. Kernpunkt dabei ist, dass die RSVP-Instanz im Router selbst implementiert wird und daher sehr eng mit dem Router und seinen Interna verzahnt operieren kann.

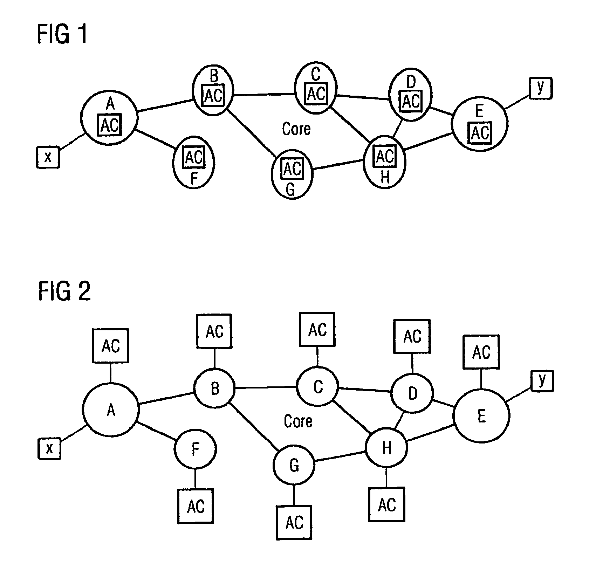

Am Beispiel eines RSVP-fähigen Netzes, d.h. eines Netzes mit RSVP-fähigen Netzknoten bzw. Routern gemäß Figur 1 soll schematisch der Ablauf beschrieben werden.

Figur 1 zeigt ein schematisches IP Netz, bestehend aus mehreren Netzknoten bzw. Routern A bis H, die intern jeweils eine Steuerkomponente AC aufweisen. Der Netzknoten A ist einerseits durch eine Serienschaltung der Netzknoten B, C, D und andererseits durch eine Serienschaltung der Netzknoten F, G, H mit dem Netzknoten E verbunden. Die Netzknoten B und G, C und H sowie D und H sind ebenfalls untereinander verbunden. Die Verbindungen bzw. Verbindungswege sind bspw. als elektrische oder optische Leitungen ausgeführt, wie Zweidrahtleitungen, Koaxialkabel oder Lichtwellenleiter. Am Netzknoten A ist ein Teilnehmer X angeschlossen und am Netzknoten E ist ein Teilnehmer Y angeschlossen.

Der Teilnehmer X erzeugt eine Ressourcen-Anforderung an das Netz für einen Datenstrom zu Teilnehmer Y. Dabei muss sichergestellt werden, dass die Ressourcen-Reservierungen in den Netzknoten auch tatsächlich entlang des späteren Datenpfades vorgenommen werden. In IP-Netzen hängt dieser Datenpfad vom aktuellen Routing ab. Daher wird im Ressourcen Reservierungs-Protokoll RSVP die Ressourcen-Anforderung mit der IP Zieladresse, also der IP-Adresse des Teilnehmers Y, in das Netz gesendet. Sie folgt damit automatisch dem Datenpfad des späteren Datenstroms zu Teilnehmer Y. Obwohl diese RSVP-Nachrichten ja nun nicht an die RSVP-Steuerungskomponenten AC bzw. RSVP Instanzen adressiert sind, müssen die RSVP-Steuerungskomponenten AC bzw. RSVP-Instanzen der auf dem Weg liegenden Netzknoten jeweils Kenntnis davon erhalten.

Daher sind diese Nachrichten durch den definierten IP-Protokoll-Typ "RSVP" im IP Header, also im Kopf eines IP-Paketes, speziell gekennzeichnet.

Die Router erkennen diesen Protokolltyp und geben solchermaßen gekennzeichnete Nachrichten direkt an ihre RSVP-Instanz weiter, also an die Steuerkomponente AC.

Später, im Verlauf der Prozedur, muss die RSVP-Instanz am Netzrand zum Teilnehmer X "ihren" Edge-Router A konfigurieren (filtering, marking, policing). Konkret ist dasjenige Interface zu konfigurieren, über das die RSVP-Nachricht vom Teilnehmer X ursprünglich eingetroffen war und über das später der Datenstrom von Teilnehmer X zu Teilnehmer Y eintreffen wird. Da die RSVP-Instanz im Router implementiert ist, kann sie diese internen Informationen abfragen.

Die Lösung für die beiden Punkte A und B liegt hier in der engen internen Kopplung zwischen Netzknoten und Steuerkomponente.
Zu A) Die Ressourcen-Anfragen erreichen die Steuerkomponente über spezielle Filter im Netzknoten bzw. Router, welche die Protokoll-ID erkennen und die Pakete am Routing vorbei direkt an die interne Steuerkomponente weiterleiten.
Zu B) Informationen zur Konfiguration des Netzknotens bzw. Routers erhält die Steuerungskomponente AC durch Zugriff auf Router-interne Daten.

Bei externen Steuerungskomponenten besteht das Problem, dass diese internen Informationen nicht beim Netzknoten abgefragt bzw. vom Netzknoten zur Verfügung gestellt werden.

Im Dokument "Implemtation techniques of intserv/diffserv integrated network" von Minghai Xu et al., IEEE Band 1, 9.April 2003, werden Verbesserungen für integrierte Services / Dienste im Rahmen von IntServ/DiffServ-Netzwerken beschrieben. Hierzu werden Service-Level-Spezifikationen (SLS) mit Flussdiagrammen und Algorithmen vorgeschlagen, bei denen bestimmte DSCP-Werte für Signalisierungsnachrichten vorgesehen werden. Weiterhin werden Grenzen für die Verzögerung von Services in DiffServ-Netzwerken diskutiert.

Im Dokument WO 01/03383 wird ein System und ein Verfahren zur Datenübertragung in einem Kommunikationssystem beschrieben. Dieses umfasst einen Quellnetzknoten, ein Paketdatennetz, Router oder Switche und ein Zielnetzknoten. Der Quellnetzknoten sendet Datenpakete, die Informationen über den Weg bzw. das Hop-Verhalten enthalten, zu einem Steuerungsnetzknoten. Der Steuerungsnetzknoten sendet die Daten-Pakete zu einem Ziel-Netzknoten, allerdings mit einem anderen Hop-Verhalten als ursprünglich in den Datenpaketen angegeben. Dieses andere Hop-Verhalten wurde vorher vom Zielnetzknoten zum Steuerungsnetzknoten gesendet.

Aufgabe der vorliegenden Erfindung ist es, ein Verfahren anzugeben, bei dem empfangene IP-Pakete mit Interface Informationen des empfangenden Netzknotens an eine externe Steuerkomponente weitergegeben werden können.

Diese Aufgabe wird durch ein Verfahren gemäß den Merkmalen des Anspruch 1 gelöst.

Der Vorteil der Erfindung besteht darin, dass IP Pakete mit netzknoteninternen Steuerinformationen an eine externe Steuerungskomponente weitergeleitet werden. Dadurch kann eine ei nem Netzknoten "beigestellte" Steuerungskomponente umfangreichere Steuerungsaufgaben des Netzknotens übernehmen.

Vorteilhafte Weiterbildungen der Erfindung sind in den Unteransprüchen angegeben.

Ein Ausführungsbeispiel der Erfindung ist in der Zeichnung dargestellt und wird im folgenden erläutert.

Dabei zeigt:
- Figur 1: ein schematisches IP-Netz mit netzknoteninternen Steuerkomponenten AC gemäß dem Stand der Technik.
- Figur 2: ein gemäß Figur 1 analog aufgebautes IP-Netz mit erfindungsgemäß an Netzknoten angeschlossenen externen Steuerkomponenten AC.

Die Figur 1 zeigt ein bereits in der Beschreibungseinleitung erläutertes IP-Netz gemäß dem Stand der Technik.

Die Figur 2 zeigt ein Netz gemäß Figur 1, mit dem Unterschied, dass jeweils eine externe Steuerungskomponente AC über eine direkte Verbindung an die Netzknoten A bis H angeschlossen ist.

Analog dem in der Beschreibungseinleitung genannten Beispiel sollen Datenpakete vom Teilnehmer X zum Teilnehmer Y übertragen werden. Dabei benötigen die externen Steuerungskomponenten AC bestimmte IP-Pakete, wie die RSVP-Pakete, und die Information, an welchem Interface des Netzknotens das IP-Paket / RSVP-Paket empfangen wurde. Letztere Information ist nur intern im Netzknoten verfügbar und kann nicht abgefragt werden. Die Routingtabellen des Netzknotens bzw. Routers enthalten nur Informationen über Ziele, jedoch nicht darüber, woher ein Paket kam.

Um das Problem zu lösen, werden zuerst auf den Interfaces der Netzknoten Regeln konfiguriert. Aktuelle Netzknoten bzw. Router unterstützen sogenanntes Policy-Routing. Dabei können Regeln konfiguriert werden, wie mit speziellen Paketen zu verfahren ist. In diesem Fall lautet die Regel:
"Pakete mit einer bestimmten Protokoll-ID werden nicht einfach weiter-geroutet, sondern an einen in der Regel eingestellten "next-hop" weitergeleitet, der zu der zuständigen externen Steuerinstanz führt."

Erfindungsgemäß werden In-Band IP Signalisierungspakete an eine externe Schnittstelle des Netzknoten abgegeben, an der die externe Steuerkomponente angeschlossen ist

Zweitens wird bei den Regeln des Policy Routing neben dem "next hop" angegeben, welchen Wert ein bestimmtes Feld des Kopffeldes des IP-Paketes annehmen soll. Beispielsweise welchen Wert das sogenannte DSCP Feld im IP Header, welches 6 Bit umfasst, annehmen soll. Dieses dient in DiffServ-Netzen zur Kennzeichnung der Paketpriorität. Bei direkter Kopplung der Steuerkomponente bzw. Steuerinstanz an den Netzknoten bzw. Router über ein eigenes Interface wird diese DSCP Information aber nicht benötigt. Daher wird auf jedem Eingangsinterface des Netzknotens eine Regel konfiguriert, die eine Nummer oder andere Informationen in ein bestimmtes Feld der Kopffelder des IP-Paketes bzw. des IP-Headers, wie das DSCP-Feld, einträgt bzw. codiert. Diese Nummer ist eindeutig einem Interface zugeordnet, so dass jedes Interface jeweils eine ihm zugeordnete Nummer oder Kennung in ein IP-Paket einträgt, wenn das IP-Paket für die externe Steuerungskomponente bestimmt ist. Das bedeutet zum Beispiel, dass jedes In-Band IP Signalisierungspaket, beispielsweise des Protokoll-Typs RSVP, auf dem Interface im DSCP Feld verändert wird, dort z.B. die Nummer des Interfaces eingetragen wird und dieses Paket an die externe Steuerungskomponente weitergeleitet wird.

Da das DSCP Feld im IP Header 6 Bit umfasst, sind 64 Werte und damit 64 Schnittstellen bzw. Interfaces eines Netzknotens unterscheidbar.

Im Netz selbst kann der DSCP Wert natürlich dennoch weiterhin zur Kennzeichnung der Paketpriorität verwendet werden, da er z.B. von der Steuerkomponente AC bzw. Steuerinstanz auf einen anderen Wert gesetzt werden kann. Darüber hinaus kann, unabhängig von der "missbräuchlichen" Verwendung des DSCP-Prioritätsfeldes, das Paket im betroffenen Router selbst mit einer wählbaren Priorität bearbeitet werden, da auch dies in einer Router-Regel formuliert werden kann.

Mit der Idee, routerinterne Informationen, wie Interface-Nummern, Virtual Path Identifier oder Virtual Channel Identifier Nummern, kurz VPI/VCI-Nummern, durch Regeln im Router den IP-Paketen hinzuzufügen, wird es möglich, Steuerungskomponenten bzw. Steuerinstanzen vom Router losgelöst zu betreiben.

## Patentansprüche

1. Verfahren zur Weitergabe von Internet-Protokoll-Paketen respektive IP-Paketen an eine jeweils einem Netzknoten (A, ..., H) zugeordnete Steuerkomponente (AC) in einem mehrere Netzknoten (A, ..., H) aufweisenden IP-Pakete vermittelnden Kommunikationsnetz, bei dem IP-Pakete an Schnittstellen des Netzknoten (A, ..., H) empfangen, erkannt, ausgewertet und verarbeitet werden,
**dadurch gekennzeichnet,**
**dass** bei einem an einer Schnittstelle des Netzknoten (A, ..., H) empfangenen und dort erkannten In-Band IP Signalisierungspaket, das durch einen Eintrag im Protokollfeld des Kopffeldes des IP-Paketes gekennzeichnet ist, ein der jeweiligen empfangenden Schnittstelle zugeordneter eineindeutiger Wert, der sich von den Werten der jeweils anderen Schnittstellen unterscheidet, in einem bestimmten Feld des Kopffeldes respektive IP-Header des IP-Paketes eingetragen wird und das veränderte Paket an die Steuerkomponente (AC) umgeleitet/abgegeben wird.

2. Verfahren nach Anspruch 1,
**dadurch gekennzeichnet,**
**dass** bei an einer Schnittstelle des Netzknotens empfangenen und dort erkannten IP Paketen des Typs "RSVP" der Wert des im Kopf des IP Paketes vorgesehenen "DSCP" Feldes in Abhängigkeit von der jeweiligen Schnittstelle verändert und das veränderte Paket an die Steuerkomponente abgegeben wird.

3. Verfahren nach Anspruch 2,
**dadurch gekennzeichnet,**
**dass** das DSCP Feld jeweils einen der verarbeitenden Schnittstelle zugeordneten Wert erhält, der sich von den Werten der jeweils anderen Schnittstellen unterscheidet.

4. Netzknoten zur Anwendung in einem Verfahren zur Weitergabe von Internet-Protokoll-Paketen respektive IP-Paketen an eine jeweils einem Netzknoten (A, ..., H) zugeordnete Steuerkomponente (AC) in einem mehrere Netzknoten (A, ..., H) aufweisenden IP-Pakete vermittelnden Kommunikationsnetz, bei dem IP-Pakete an Schnittstellen des Netzknoten (A, ..., H) empfangen, erkannt, ausgewertet und verarbeitet werden,
**dadurch gekennzeichnet, dass**
der Netzknoten(A, ..., H) Schnittstellen zum Empfang von IP-Paketen aufweist und auf den Schnittstellen der Netzknoten Regeln definiert werden, derart dass
bei einem an einer Schnittstelle des Netzknoten empfangenen und dort erkannten In-Band IP Signalisierungspaket, das durch einen Eintrag im Protokollfeld des Kopffeldes des IP-Paketes gekennzeichnet ist, ein der jeweiligen empfangenden Schnittstelle zugeordneter eineindeutiger Wert, der sich von den Werten der jeweils anderen Schnittstellen unterscheidet, in einem bestimmten Feld des Kopffeldes respektive IP-Header des IP-Paketes eingetragen wird und das veränderte Paket an die Steuerkomponente (AC) umgeleitet/abgegeben wird.

## Claims

1. Method for relaying internet protocol packets or IP packets to a control component (AC) assigned respectively to a network node (A, ..., H) in a communication network having a plurality of network nodes (A, ..., H) and switching IP packets, in which IP packets are received, identified, evaluated and processed at interfaces of the network node (A, ..., H), **characterised in that**
in the case of an in-band IP signalling packet received at an interface of the network node (A, ..., H) and identified there, which is **characterised by** an input in the protocol field of the header field of the IP packet, a unique value assigned to the respective receiving interface, which is different from the values of the other respective interfaces, is input in a defined field of the header field or IP header of the IP packet and the modified packet is rerouted/output to the control component (AC).

2. Method according to claim 1,
**characterised in that**
in the case of IP packets of the type RSVP received at an interface of the network node and identified there, the value of the DSCP field provided in the header of the IP packet is modified as a function of the respective interface and the modified packet is output to the control component.

3. Method according to claim 2,
**characterised in that**
the DSCP field respectively contains a value assigned to the processing interface, which is different from the values of the other respective interfaces.

4. Network node for use in a method for relaying internet protocol packets or IP packets to a control component (AC) assigned respectively to a network node (A, ..., H) in a communication network having a plurality of network nodes (A, ..., H) and switching IP packets, in which IP packets are received, identified, evaluated and processed at interfaces of the network node (A, ..., H),
**characterised in that**
the network node (A, ..., H) has interfaces for receiving IP packets and rules are defined on the interfaces of the network node such that
in the case of an in-band IP signalling packet received at an interface of the network node and identified there, which is **characterised by** an input in the protocol field of the header field of the IP packet, a unique value assigned to the respective receiving interface, which is different from the values of the other respective interfaces, is input in a defined field of the header field or IP header of the IP packet and the modified packet is rerouted/output to the control component (AC).

## Revendications

1. Procédé de retransmission de paquets de protocole Internet ou paquets IP respectifs à un composant de commande (AC) associé respectivement à un noeud de réseau (A, ..., H) dans un réseau de communication comportant plusieurs noeuds de réseau (A, ... H), commutant des paquets IP et dans lequel des paquets IP sont reçus, reconnus, évalués et traités au niveau d'interfaces du noeud de réseau (A, ..., H), **caractérisé en ce que**, étant donné un paquet de signalisation IP en bande reçu et reconnu au niveau d'une interface du noeud de réseau (A, ..., H) et marqué par une entrée dans le champ de protocole du champ d'en-tête du paquet IP, une valeur bi-univoque associée à l'interface de réception respective et différente des valeurs des autres interfaces respectives est inscrite dans un champ déterminé du champ d'en-tête ou header IP du paquet IP et le paquet modifié est renvoyé / délivré au composant de commande (AC).

2. Procédé selon la revendication 1, **caractérisé en ce que**, étant donné des paquets IP du type « RSVP » reçus et reconnus au niveau d'une interface du noeud de réseau, la valeur du champ « DSCP » prévu dans l'en-tête du paquet IP est modifiée en fonction de l'interface respective et le paquet modifié est délivré au composant de commande.

3. Procédé selon la revendication 2, **caractérisé en ce que** le champ DSCP reçoit respectivement une valeur associée à l'interface de traitement et différente des valeurs des autres interfaces respectives.

4. Noeud de réseau destiné à être utilisé dans un procédé de retransmission de paquets de protocole Internet ou paquets IP à un composant de commande (AC) associé respectivement à un noeud de réseau (A, ..., H) dans un réseau de communication comportant plusieurs noeuds de réseau (A, ... H), commutant des paquets IP et dans lequel des paquets IP sont reçus, reconnus, évalués et traités au niveau d'interfaces du noeud de réseau (A, ..., H), **caractérisé en ce que**
le noeud de réseau (A, ..., H) comporte des interfaces pour la réception de paquets IP et **en ce que** des règles sont définies, sur les interfaces des noeuds de réseau, de manière telle que, étant donné un paquet de signalisation IP en bande reçu et reconnu au niveau d'une interface du noeud de réseau et marqué par une entrée dans le champ de protocole du champ d'en-tête du paquet IP, une valeur bi-univoque associée à l'interface de réception respective et différente des valeurs des autres interfaces respectives est inscrite dans un champ déterminé du champ d'en-tête ou header IP du paquet IP et le paquet modifié est renvoyé / délivré au composant de commande (AC).
